Europäisches Patentamt

**European Patent Office**

**Office européen des brevets**

(19)

(11) Numéro de publication: **0 249 558**
**B1**

(12) **FASCICULE DE BREVET EUROPEEN**

(45) Date de publication du fascicule du brevet:
**20.12.89**

(51) Int. Cl.⁴: **E02B 7/20**, G05D 9/04

(21) Numéro de dépôt: 87401315.4

(22) Date de dépôt: **11.06.87**

(54) Vanne de régulation automatique de niveau.

(30) Priorité: **13.06.86 FR 8608560**

(43) Date de publication de la demande:
**16.12.87 Bulletin 87/51**

(45) Mention de la délivrance du brevet:
**20.12.89 Bulletin 89/51**

(84) Etats contractants désignés:
**DE ES FR GB GR IT NL**

(56) Documents cités:
**EP-A- 0 083 800**
**DE-A- 3 023 558**
**DE-B- 1 095 751**
**US-A- 2 851 861**

**PATENT ABSTRACTS OF JAPAN,**
**vol. 8, no. 152 (M-309)[1589], 14 juillet 1984**

(73) Titulaire: **ALSTHOM, 38, avenue Kléber, F-75784 Paris
Cédex 16(FR)**

(72) Inventeur: **Combes, Gilles, 72 avenue Léon Blum,
F-38100 Grenoble(FR)**
Inventeur: **Delage, Germain, Chemin des Arriots
Montbonnot St Martin, F-38330 Saint Ismier(FR)**

(74) Mandataire: **Weinmiller, Jürgen et al,
Lennéstrasse 9 Postfach 24, D-8133 Feldafing(DE)**

ACTORUM AG

**Description**

La présente invention concerne la régulation d'un niveau d'eau, par exemple dans un bief d'un canal ou dans un réservoir qui font partie d'un réseau d'irrigation. Elle concerne plus particulièrement une vanne assurant cette régulation de manière automatique.

Une telle vanne est connue par les documents PATENTS ABSTRACTS OF JAPAN, vol.8, no. 152 (M-309) (1589), 14 juillet 1984 ; et JP-A-59 48 512 (HOUKOKU KOGYO K.K) 19-03-1984. Elle comporte un tablier qui sépare deux biefs amont et aval et qui est porté par une charpente à distance à l'amont d'un axe horizontal transversal de telle sorte qu'une oscillation de cette charpente s'accompagne d'un déplacement sensiblement vertical de ce tablier. Ces déplacements sont entraînés par un caisson moteur plongeant partiellement dans l'eau du bief amont. Le bief aval est le "bief contrôlé" c'est-à-dire celui dont le niveau doit être maintenu approximativement constant. L'action motrice commandable du caisson résulte du fait qu'une quantité d'eau commandée est présente dans sa partie basse, cette quantité étant commandée par la pression de l'air dans sa partie haute. Cette dernière est maintenue en dépression par rapport à l'atmosphère par un entraînement d'air effectué par des jets d'eau à travers une cloison perforée séparant deux compartiments internes à ce caisson. Pour former ces jets, une différence de niveau d'eau est maintenue dynamiquement entre ces deux compartiments par des ouvertures basses convenablement orientées pour cela par rapport à l'écoulement d'eau sous le caisson.

La dépression d'air ainsi créée dans le caisson est une dépression "primaire". Elle est limitée de manière commandée par un capteur constitué par un conduit qui relie la partie haute du caisson moteur à une ouverture de prise d'air située à une altitude convenable dans le bief aval. Cette ouverture est obturée par l'eau quand le niveau dans ce bief monte trop haut.

Cette vanne connue présente notamment l'inconvénient que la dépression d'air primaire essentielle à son fonctionnement dépend directement de la présence, de la direction et de la vitesse de l'écoulement de l'eau au-dessous du tablier. Elle disparaît si la vanne est fermée. Elle est fortement modifiée si un obstacle dévie un peu l'écoulement juste à l'amont du tablier.

La présente invention a notamment pour but d'assurer de manière simple un fonctionnement plus sûr et plus précis d'une telle vanne de régulation.

Et elle a pour objet une vanne de régulation automatique de niveau comportant

- un tablier disposé dans un pertuis pour séparer un bief amont et un bief aval, l'un de ces biefs étant un bief contrôlé dont le niveau doit être maintenu, ce tablier étant mobile d'un mouvement présentant une composante verticale pour obturer plus ou moins ce pertuis de manière à laisser passer un débit d'eau plus ou moins important et à combattre ainsi les variations éventuelles de ce niveau,

- un caisson moteur mobile dont le mouvement présente une composante verticale liée à celle du mouvement de ce tablier, ce caisson plongeant dans l'eau sur une partie variable de sa hauteur pour en recevoir une poussée de flottaison variable,

- ce caisson présentant un ouverture basse pour permettre à l'eau de pénétrer dans ce caisson et d'en occuper une partie basse de hauteur variable pour augmenter le poids total agissant sur ce caisson et pour que la force verticale résultant éventuellement de cette poussée et de ce poids déplace ce tablier,

- ce caisson présentant aussi une ouverture haute pour permettre à de l'air de sortir d'une partie haute restante de ce caisson et/ou d'y entrer,

- cette vanne comportant encore une source de dépression d'air créant une dépression primaire par rapport à l'atmosphère,

- un circuit d'air comportant lui même une branche d'alimentation en dépression et une branche d'échappement de dépression, l'une au moins de ces branches étant commandable, de manière à permettre de mettre ladite ouverture haute en communication avec cette source et avec l'atmosphère, pour faire pénétrer l'eau dans ledit caisson et pour l'en faire sortir respectivement,

- et un capteur de niveau sensible à la fifférence entre le niveau dudit bief contrôlé et un niveau de consigne, ce capteur commandant ladite branche commandable pour appliquer audit caisson moteur une dépression d'air effective, qui est une fraction commandable de ladite dépression fournie par ladite source, ce capteur faisant varier cette fraction de manière à asservir le niveau de ce bief à ce niveau de consigne,

- cette vanne étant caractérisée par le fait que la dite source de dépression est une trompe d'aspiration hydraulique, cette trompe comprenant une entrée d'eau débouchant dans ledit bief amont, un convergent, une entrée d'aspiration d'air, un divergent, et une sortie d'eau et d'air débouchant dans ledit bief aval pour faire apparaître ladite dépression d'air primaire sur cette entrée d'aspiration.

Si ledit bief contrôlé est le bief aval ledit capteur commande ledit circuit d'air comme suit :
Il répond à une élévation du niveau de ce bief aval au-dessus du niveau de consigne en fermant au moins partiellement ladite branche d'échappement et/ou en ouvrant de même ladite branche d'alimentation, et il répond à un abaissement du niveau de ce bief au-dessous du niveau de consigne par une commande en sens inverse.

Si c'est le bief amont ledit capteur commande ledit circuit d'air comme suit :
Il répond à une élévation du niveau de ce bief amont au dessus du niveau de consigne en ouvrant au moins partiellement ladite branche d'échappement et/ou en fermant de même ladite branche d'alimentation, et il répond à un abaissement du niveau de ce bief amont au-dessous du niveau de consigne par une commande en sens inverse.

A l'aide des figures schématiques ci-jointes on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence.

Lorsqu'un de ces signes de référence a été employé ci-dessus c'était pour permettre de se référer à ces mêmes figures à titre d'exemple non limitatif. Il doit être compris que les éléments mentionnés peuvent être remplacés par d'autres éléments assurant les mêmes fonctions techniques.

La figure 1 représente une vue d'une première vanne selon l'invention, adaptée au réglage du niveau du bief aval, en coupe par un plan vertical longitudinal I-I de la figure 2.

La figure 2 représente une vue partielle de dessus de cette vanne.

La figure 3 représente une vue de cette vanne en coupe par un plan vertical transversal III-III de la figure 1.

La figure 4 représente une vue de la même vanne selon l'invention, mais adaptée au réglage du niveau du bief amont, en coupe par un plan vertical longitudinal analogue à celui de la figure 1.

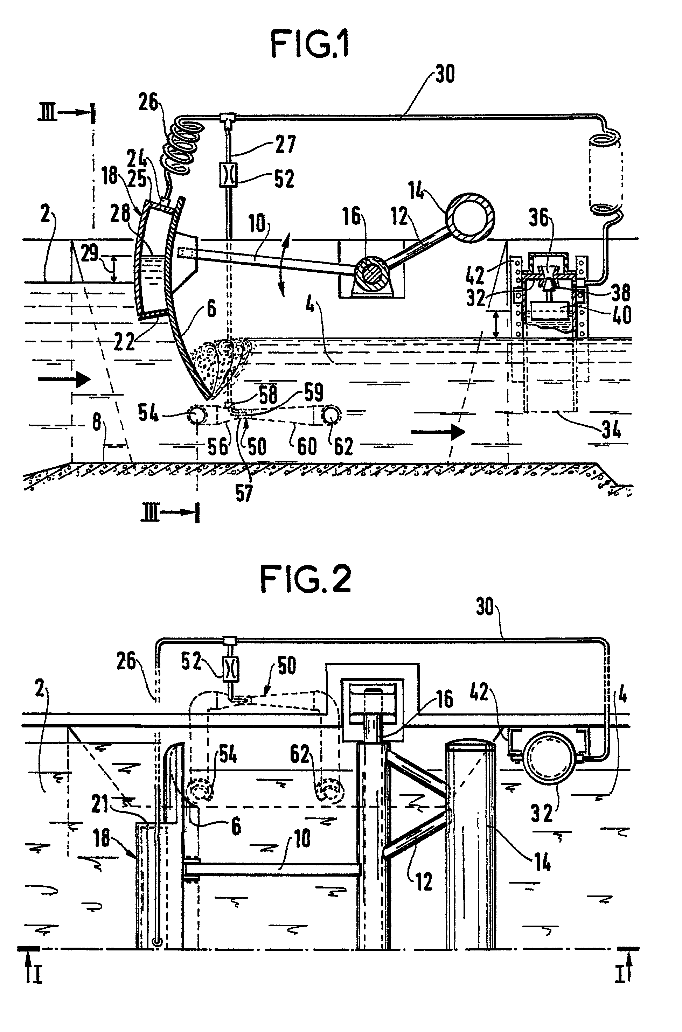

Un réseau d'irrigation comporte un bief amont 2 et un bief aval 4 séparés par cette vanne dont le tablier métallique 6 se déplace dans un pertuis de béton 8 et peut éventuellement obturer entièrement ce pertuis. La direction de l'écoulement est parallèle au plan de la figure 1 et est appelée ici longitudinale.

Ce tablier est porté à l'extrémité de la branche amont 10 d'une charpente métallique dont une branche aval 12 porte un contrepoids 14. Cette charpente oscille autour d'un axe horizontal transversal 16 situé approximativement au niveau du bief amont 2.

Le tablier 6 présente la forme d'un secteur angulaire d'un cylindre de révolution autour de l'axe 16. Il porte sur sa face amont un caisson 18 dont la paroi amont 20 est cylindrique et coaxiale et les parois latérales 21 sont verticales. Une ouverture basse immergée 22 de ce caisson est protégée par une crépine. Une ouverture haute 24 est percée dans la paroi supérieure 25. Elle est raccordée à une tubulure souple 26 qui est raccordée à une tubulure d'aspiration 27, qui constitue la branche d'alimentation en dépression précédemment mentionnée, ceci pour aspirer plus ou moins l'air de ce caisson. Cette aspiration élève plus ou moins le niveau intérieur de l'eau 28 qui y pénètre par l'ouverture basse 22, cette élévation par rapport au niveau du bief amont 2 étant représentée en 29.

La tubulure 26 est d'autre part raccordée à une tubulure de commande 30 qui constitue partiellement la branche d'échappement de dépression précédemment mentionnée. Cette dernière est également mise en dépression à partir de la tubulure d'aspiration 27. Elle débouche dans la partie supérieure d'une enceinte de capteur 32 dont la partie inférieure 34 s'ouvre dans le bief aval 4.

Cette enceinte présente par ailleurs une ouverture supérieure 36 qui peut être plus ou moins obturée par un pointeau conique 38 à pointe en haut porté par un flotteur 40 qui flotte dans cette enceinte. La section de passage de l'air est d'autant plus faible que l'eau est plus haute dans le bief 4 et par conséquent dans l'enceinte 32. Le niveau de l'eau dans cette enceinte monte plus vite que dans le bief 4 en raison d'une augmentation de la dépression d'air, ce qui accélère la fermeture de l'orifice 36.

L'enceinte 32 est normalement immobile. Elle peut cependant être fixée à diverses hauteurs sur des bandes d'appui verticales 42 pour changer le niveau de consigne du bief 4. Ceci pourrait aussi être obtenu par réglage de la hauteur du pointeau 38 au-dessus du flotteur 40, grâce à une tige filetée non représentée portant ce pointeau et se vissant plus ou moins dans ce flotteur.

La tubulure d'aspiration 27 est mise en dépression par une trompe hydraulique d'aspiration 50 par l'intermédiaire d'un diaphragme 52 qui constitue le limiteur de débit d'air précédemment mentionné. Cette trompe constitue ladite source de dépression et comporte une entrée d'eau 54 qui s'ouvre dans le bief amont 2 à travers une crépine et qui alimente un convergent 56. Ce dernier forme, dans le col 57, un écoulement à forte vitesse et à faible pression qui entraîne l'air d'une entrée d'air 58 qui communique avec une tubulure d'aspiration 59 dans l'axe du col. L'eau mélangée d'air est reprise par un divergent 60 qui débouche, par une sortie 62, dans le bief aval 4.

Dans un cas particulier, le débit d'eau passant par le vanne peut atteindre 10 m³/s. Le niveau amont peut varier de 1,40 m à 2 m, et le niveau aval de 1,20 m à 1,70 m. La trompe à eau est placée à un niveau de 1 m, présente un diamètre de 150 mm à l'entrée du convergent, de 75 mm au col, et de 150 mm à la sortie du divergent. La longueur du convergent est de 200 mm, celle du col de 75 mm, et celle du divergent de 615 mm. La tubulure d'aspiration d'air pénétrant dans l'axe de ce col présente un diamètre intérieur de 10 mm et un diamètre extérieur de 12 mm. La puissance pneumatique fournie par cette trompe est suffisante pour le fonctionnement de la vanne et le débit de fuite d'eau n'est pas gênant.

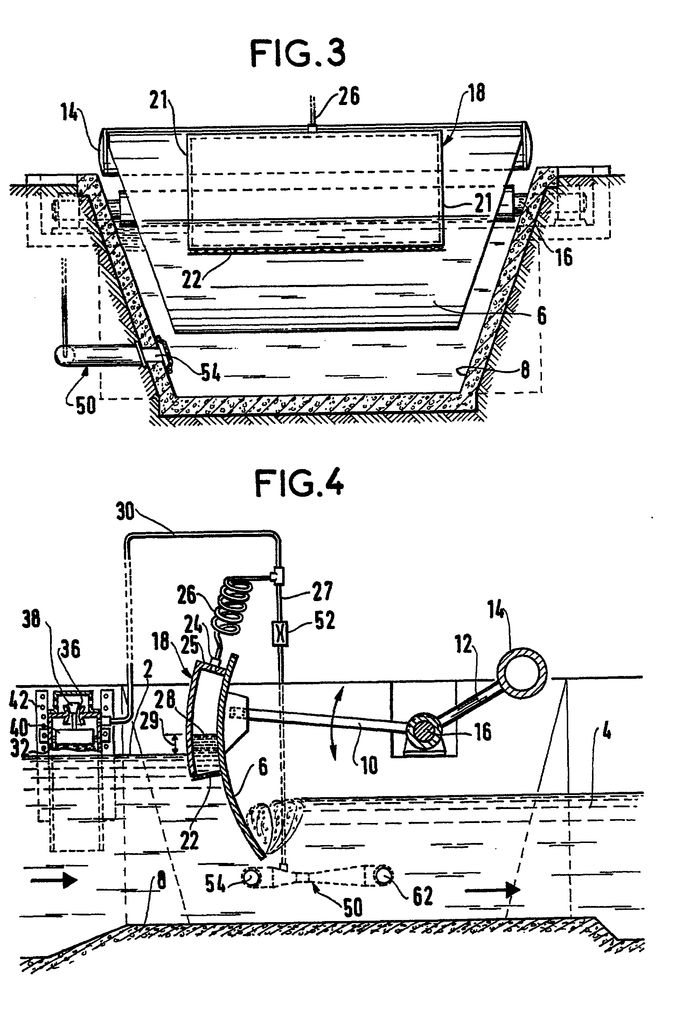

La vanne selon l'invention représentée figure 4 est la même que précédemment décrit sauf que, pour assurer le réglage du niveau du bief amont 2, l'enceinte 32 contenant le flotteur 40 est placée dans ce bief. De plus le pointeau 38 est placé avec la pointe en bas de manière à obturer l'ouverture 36 quand le niveau baisse.

Bien entendu, si l'on doit fréquemment changer le mode de fonctionnement de la vanne pour qu'elle maintienne le niveau d'eau tantôt dans le bief amont, tantôt dans le bief aval, on utilise deux enceintes telles que 32 chacune avec son flotteur tel que 40 et son pointeau obturateur tel que 38, l'une étant placée dans le bief amont, l'autre dans le bief aval. Le mode de fonctionnement est alors choisi en raccordant la tubulure de commande 30 à l'une ou à l'autre de ces deux enceintes.

**Revendications**

1/ Vanne de régulation automatique de niveau comportant
- un tablier (6) disposé dans un pertuis (8) pour séparer un bief amont (2) et un bief aval (4), l'un de ces biefs étant un bief contrôlé dont le niveau doit être maintenu, ce tablier étant mobile d'un mouvement présentant une composante verticale pour obturer plus ou moins ce pertuis de manière à laisser passer un débit d'eau plus ou moins important et à combattre ainsi les variations éventuelles de ce niveau,

- un caisson moteur (18) mobile dont le mouvement présente une composante verticale liée à celle du mouvement de ce tablier, ce caisson plongeant dans l'eau sur une partie variable de sa hauteur pour en recevoir une poussée de flottaison variable,

- ce caisson présentant un ouverture basse (22) pour permettre à l'eau (28) de pénétrer dans ce caisson et d'en occuper une partie basse de hauteur variable pour augmenter le poids total agissant sur ce caisson et pour que la force verticale résultant éventuellement de cette poussée et de ce poids déplace ce tablier,

- ce caisson présentant aussi une ouverture haute (24) pour permettre à de l'air de sortir d'une partie haute restante de ce caisson et/ou d'y entrer,

- cette vanne comportant encore une source de dépression d'air (50) créant une dépression primaire par rapport à l'atmosphère,

- un circuit d'air comportant lui même une branche d'alimentation en dépression (27) et une branche d'échappement de dépression (30), l'une au moins de ces branches étant commandable, de manière à permettre de mettre ladite ouverture haute (24) en communication avec cette source et avec l'atmosphère, pour faire pénétrer l'eau dans ledit caisson et pour l'en faire sortir respectivement,

- et un capteur de niveau (40) sensible à la différence entre le niveau dudit bief contrôlé (4) et un niveau de consigne, ce capteur commandant ladite branche commandable (30, 32, 36) pour appliquer audit caisson moteur (6) une dépression d'air effective, qui est une fraction commandable de ladite dépression fournie par ladite source, ce capteur faisant varier cette fraction de manière à asservir le niveau de ce bief à ce niveau de consigne,

- cette vanne étant caractérisée par le fait que la dite source de dépression (50) est une trompe d'aspiration hydraulique, cette trompe comprenant une entrée d'eau (54) débouchant dans ledit bief amont (2), un convergent (56), une entrée d'aspiration d'air (58), un divergent (60), et une sortie d'eau et d'air (62) débouchant dans ledit bief aval (4) pour faire apparaître ladite dépression d'air primaire sur cette entrée d'aspiration.

2/ Vanne selon la revendication 1, adaptée au cas où ledit bief contrôlé est le bief aval (4), et caractérisée par le fait que ledit capteur (40) commande ledit circuit d'air (52, 27, 30, 32, 36) comme suit :

Il répond à une élévation du niveau de ce bief aval au-dessus du niveau de consigne en fermant au moins partiellement ladite branche d'échappement (30, 32, 36) et/ou en ouvrant de même ladite branche d'alimentation, et il répond à un abaissement du niveau de ce bief au-dessous du niveau de consigne par une commande en sens inverse.

3/ Vanne selon la revendication1 , adaptée au cas où ledit bief contrôlé est ledit bief amont (2) et caractérisée par le fait que ledit capteur (40) commande ledit circuit d'air (52, 27, 30, 32, 36) comme suit :

Il répond à une élévation du niveau de ce bief amont au dessus du niveau de consigne en ouvrant au moins partiellement ladite branche d'échappement (30, 32, 36) et/ou en fermant de même ladite branche d'alimentation, et il répond à un abaissement du niveau de ce bief amont au-dessous du niveau de consigne par une commande en sens inverse.

4/ Vanne selon la revendication 1, caractérisée par le fait que ledit capteur (40) commande seulement ladite branche d'échappement (30, 32, 36), de manière à permettre une réalisation simple dudit circuit d'air.

5/ Vanne selon la revendication 4, caractérisée par le fait que ladite branche d'échappement d'énergie (30, 32, 36) communique avec l'atmosphère par l'intermédiaire d'une enceinte immobile (32), une ouverture inférieure (34) de cette enceinte étant située au-dessous du niveau de l'eau, pour permettre à l'eau dudit bief contrôlé (4) d'occuper une partie basse variable de cette enceinte, ladite branche d'échappement passant par la partie supérieure restante de cette enceinte, une ouverture supérieure (36) de cette enceinte s'ouvrant dans l'atmosphère au-dessus du niveau de l'eau,

- ledit capteur étant constitué par un flotteur (40) flottant dans cette enceinte de manière à être protégé par celle-ci, ce flotteur entraînant un obturateur mobile (38) pour obturer cette ouverture supérieure, de manière à commander cette branche d'échappement.

6/ Vanne selon la revendication 5, caractérisée par le fait que ledit obturateur est constitué par un pointeau (38) présentant une surface latérale conique autour d'un axe de déplacement de ce pointeau, ladite ouverture supérieure (36) étant circulaire et coaxiale à ce pointeau, de manière que ledit capteur (40) assure une commande progressive et que les déplacements dudit tablier (6) soient eux aussi progressifs.

7/ Vanne selon la revendication 6, caractérisée par le fait que ledit pointeau (38) est fixé au dessus dudit flotteur (40), son axe étant vertical.

## Patentansprüche

1. Schieber zur automatischen Pegeleinstellung,
   - mit einer in einem Wehr (8) angeordneten Schützentafel (6) zur Trennung einer oberen (2) von einer unteren Wasserstrecke (4), wobei eine dieser Strecken eine geregelte Strecke ist, deren Pegel konstant gehalten werden soll, und wobei die Schützentafel eine Bewegung ausführen kann, die eine senkrechte Komponente zum mehr oder weniger weitgehenden Schließen des Wehrs besitzt, derart, daß eine mehr oder weniger große Wassermenge durchgelassen und somit den eventuellen Schwankungen des Pegels begegnet wird,
   - einem beweglichen Antriebskasten (18), dessen Bewegung eine an die Bewegung der Schützentafel gebundene senkrechte Komponente besitzt, wobei ein veränderlicher Höhenabschnitt des Kastens in das Wasser eintaucht, um so einen veränderlichen Wasserstandsschub zu empfangen,

– wobei der Kasten eine untere Öffnung (22) zum Einlaß des Wassers (28) in den Kasten und zum Anfüllen eines unteren Teils veränderlicher Höhe desselben aufweist, so daß das auf den Kasten einwirkende Gesamtgewicht sich erhöht, und die aus dem Schub und dem Gewicht eventuell resultierende senkrecht gerichtete Kraft die Schützentafel verstellt,

– wobei der Kasten auch eine obere Öffnung (24) aufweist, um die Luft aus einem oben verbliebenen Teil des Kastens austreten bzw. in denselben eintreten zu lassen,

– wobei der Schieber weiter eine Unterdruck-Luftquelle (50) aufweist, die einen Primärunterdruck bezogen auf die Umgebungsluft erzeugt,

– mit einem Luftkreislauf, der selber einen Unterdruckversorgungszweig (27) und einen Unterdruckauslaßzweig (30) aufweist, von denen mindestens einer steuerbar ist, derart, daß die obere Öffnung (24) in Verbindung mit der genannten Quelle und mit der Umgebungsluft gebracht werden kann, um das Wasser in den Kasten eintreten bzw. aus ihm austreten zu lassen,

– und mit einem Pegelsensor (40), der auf den Pegelunterschied zwischen der geregelten Strecke (4) und einem Bezugspegel anspricht, wobei der Sensor die steuerbaren Zweige (30, 32, 36) zur Herbeiführung eines effektiven Luftunterdruckes, der ein steuerbarer Teil des von der Quelle gelieferten Unterdrucks ist, im Antriebskasten (6) steuert, und wobei dieser Sensor diesen Teil so verändert, daß der Pegel der geregelten Strecke auf den Bezugspegel eingeregelt wird, dadurch gekennzeichnet, daß die Unterdruckquelle (50) eine hydraulische Düse ist, die einen in die obere Kanalstrecke (2) einmündenden Wassereintritt (54), einen sich verjüngenden Abschnitt (56), einen Luftansaugeintritt (58), einen sich erweiternden Abschnitt (60) und eine in die untere Kanalstrecke (4) einmündenden Wasser- und Luftaustritt (62) zur Herbeiführung des Primärluftunterdrucks im Ansaugeintritt aufweist.

2. Schieber nach Anspruch 1, für den Fall, bei dem die geregelte Strecke die untere Strecke (4) ist, dadurch gekennzeichnet, daß der Sensor (40) den Luftstromkreis (52, 27, 30, 32, 36) wie folgt steuert:

er reagiert auf eine Erhöhung des Pegels der unteren Strecke über den Bezugspegel hinaus, indem der Auslaßzweig (30, 32, 36) zumindest teilweise geschlossen und/oder der Versorgungszweig geöffnet wird, und er reagiert auf ein Absinken des Pegels dieser Strecke unter den Bezugspegel durch ein Verhalten im umgekehrten Sinn.

3. Schieber nach Anspruch 1, für den Fall, bei dem die geregelte Strecke die obere Strecke (4) ist, dadurch gekennzeichnet, daß der Sensor (40) den Luftstromkreis (52, 27, 30, 32, 36) wie folgt steuert:

er reagiert auf eine Erhöhung des Pegels der oberen Strecke über den Bezugspegel hinaus durch zumindest teilweises Öffnen des Auslaßzweiges (30, 32, 36) und/oder Schließen des Versorgungszweiges, und er reagiert auf ein Absinken des Pegels dieser Strecke unter den Bezugspegel durch ein Verhalten im umgekehrten Sinn.

4. Schieber nach Anspruch 1, dadurch gekennzeichnet, daß der Sensor (40) nur den Auslaßzweig (30, 32, 36) steuert, derart, daß eine einfache Gestaltung des Luftstromkreises möglich ist.

5. Schieber nach Anspruch 4, dadurch gekennzeichnet, daß der Energieauslaßzweig (30, 32, 36) mit der Umgebungsluft durch einen unbeweglichen Behälter (32) in Verbindung steht, wobei eine untere Öffnung (34) desselben unterhalb des Wasserniveaus angeordnet ist, um dem Wasser der geregelten Strecke (4) das Auffüllen des unteren veränderlichen Teils des Behälters zu ermöglichen, wobei der Auslaßzweig durch den restlichen oberen Teil des Behälters verläuft und eine obere Öffnung (36) dieses Behälters oberhalb des Wasserspiegels in die Umgebungsluft mündet, und daß der Sensor aus einem Schwimmer (40) besteht, der im Behälter unter dem Schutz desselben schwimmt und einen beweglichen Verschluß (38) zum Verschließen der oberen Öffnung bewegt, so daß der Auslaßzweig gesteuert wird.

6. Schieber nach Anspruch 5, dadurch gekennzeichnet, daß der Verschluß aus einer Düsennadel (38) besteht, die eine konische Seitenfläche um die Verstellachse der Düsennadel herum besitzt, wobei die obere Öffnung (36) kreisförmig ist und koaxial zur Düsennadel (36) liegt, derart, daß der Sensor (40) eine progressive Steuerung ausübt und die Verstellung der Schützentafel (6) ebenfalls progressiv erfolgt.

7. Schieber nach Anspruch 6, dadurch gekennzeichnet, daß die Düsennadel (38) oberhalb des Schwimmers (40) befestigt ist und ihre Achse senkrecht steht.

**Claims**

1. An automatic level-regulating sluice, comprising:

– a gate (6) located in a barrage (8) for separating an upstream reach (2) from a downstream reach (4), one of said reaches being a controlled reach whose level is to be maintained, said gate being movable by a motion including a vertical component for closing said barrage to a greater or lesser extent in order to pass a greater or lesser water flowrate, and thereby counteract possible variations in level;

– a moving driving caisson (18) whose motion includes a vertical component linked to the vertical component of the plate motion, a variable depth of said caisson being immersed in the water in order to receive a variable flotation thrust therefrom,

– said caisson having a bottom opening (22) for enabling water (20) to enter into said caisson and occupy a variable depth bottom portion thereof in order to increase the total weight acting on said caisson so that the resulting vertical force of said thrust and said weight may optionally cause said gate to move,

– said caisson also having a top opening (24) for enabling air to leave the remaining top portion of the caisson and/or to enter said top portion,

– said sluice further including a source of low pressure air (50) for setting up a primary pressure reduction relative to the atmosphere,

– an air circuit itself including a low pressure feed branch (27) and a low pressure exhaust branch (30), at least one of said branches being controllable in such a manner as to put said top opening (24) into communication with said source and with the atmosphere, in order respectively to cause water to penetrate into said caisson and to cause it to depart therefrom; and

– a level sensor (40) sensitive to the difference in level between said controlled reach (4) and a reference level, said sensor controlling said controllable branch (30, 32, 36) in order to apply an effective reduced air pressure to said driving caisson (6), said effective reduced air pressure being a controllable fraction of said low pressure provided by said source, said sensor causing said fraction to vary in a manner which is controlled by the level of said reach and of said reference level,

– said sluice being characterized in that said low pressure source (50) is a hydraulic suction Venturi pipe, said pipe comprising a water inlet (54) opening into said upstream reach (2), a converging portion (56), an air suction inlet (58), a diverging portion (60), and a water and air outlet (62) opening out into said downstream reach (4) in order to cause said primary reduction in air pressure to appear at said suction inlet.

2. A sluice according to claim 1, suitable for the case where said controlled reach is the downstream reach (4) and characterized in that said sensor (40) controls said air circuit (52, 27, 30, 32, 36) as follows:

in response to an increase in the level of said downstream reach above the reference level it closes, at least partially, said exhaust branch (30, 32, 36) and/or simultaneously opens said feed branch, and in response to a drop of the level in said reach below the reference level it provides control in the opposite direction.

3. A sluice according to claim 1, suitable for the case where said controlled reach ist the upstream reach (2), and characterized in that said sensor (40) controls said air circuit (52, 27, 30, 32, 36) as follows:

in response to an increase in the level of said upstream reach above the reference level it opens, at least partially, said exhaust branch (30, 32, 36) and/or simultaneously closes said feed branch, and in response to a drop of the level in said reach below the reference level it provides control in the opposite direction.

4. A sluice according to claim 1, characterized in that said sensor (40) controls only said exhaust branch (30, 32, 36), so as to provide a simple embodiment of said air circuit.

5. A sluice according to claim 4, characterized in that said energy exhaust branch (30, 32, 36) communicates with the atmosphere via a stationary chamber (32), a bottom opening (34) of said chamber being situated under the water level to allow water of said controlled reach (4) to occupy a variable bottom portion of said chamber, said exhaust branch passing via the remaining top portion of said chamber, a top opening (36) of said chamber opening out into the atmosphere above the water level,

– said sensor being constituted by a float (40) floating inside said chamber in such a manner as to be protected thereby, said float driving a moving shutter (38) to close said top opening in such a manner as to control said exhaust branch.

6. A sluice according to claim 5, characterized in that said shutter is constituted by a needle (38) having a conical side surface about the axis of needle displacement, said top opening (36) being circular and coaxial with said needle in such a manner that said sensor (40) provides progressive control and that the movements of said gate (6) are also progressive.

7. A sluice according to claim 6, characterized in that said needle (38) is mounted above said float (40), its axis being vertical.

# FIG.1

# FIG.2

# FIG.3

# FIG.4